# EUROPEAN PATENT APPLICATION

(11) **EP 4 497 526 A1**
(43) Date of publication of application: **29.01.2025**
(21) Application number: 24177316.7
(22) Date of filing: 22.05.2024
(51) Int. Cl.: B23K 9/16, B23K 9/32, H01B 9/00, H01R 4/28, H01R 9/11, H01R 35/04, B23K 37/02

(54) **QUICK-CHANGE CABLE AND WELDING TORCH SYSTEM HAVING QUICK-CHANGE CABLES**

(30) Priority: 25.05.2023 US 202363468852 P; 09.05.2024 US 202418659624
(71) Applicant: Illinois Tool Works Inc., Glenview IL 60025 (US)
(72) Inventor: LIZOTTE, Ryan, Glenview, 60025 (US); WHIPPLE, Bradley Eugene, Glenview, 60025 (US)
(74) Representative: HGF

(57) **Abstract**

A housing for securing a welding torch comprising a first aperture at a first end of the housing to receive a welding torch neck, a second aperture at a second end of the housing to receive a welding torch cable, and at least one fastener mounted on an external surface of the housing, wherein the fastener is configured to bias the welding torch cable toward the first aperture to secure the welding torch cable when the fastener is engaged.

## Description

### RELATED APPLICATIONS

This application claims priority to Provisional Application No. 63/468,852 filed May 25, 2023, which is incorporated herein by reference in its entirety.

### FIELD OF THE DISCLOSURE

This disclosure relates generally to robotic welding and, more particularly, to quick-change cable systems for welding torch systems.

### BACKGROUND

Welding torch systems may require regular maintenance and replacement of welding torch cables. Welding torch systems may include quick-change cable systems and connectors to reduce the time and complexity of welding torch cable replacements.

### SUMMARY

Quick-change cable systems and welding systems including welding torch system are disclosed, substantially as illustrated by and described in connection with at least one of the figures, as set forth more completely in the claims.

### BRIEF DESCRIPTION OF THE DRAWINGS

FIG. 1 illustrates an example robotic welding system, in accordance with aspects of this disclosure.
FIG. 2 illustrates a schematic diagram of an example quick-change cable system that may be used to implement the robotic welding system of FIG. 1.
FIG. 3A illustrates a perspective view of an example rotating power connector that may be used to implement the quick-change cable system of FIG. 2.
FIG. 3B illustrates a sectional view of an example rotating power connector that may be used to implement the quick-change cable system of FIG. 2, in accordance with aspects of this disclosure.
FIG. 4 illustrates a sectional view of the example rotating power connector of FIG. 3A and FIG. 3B secured within the quick-change cable system of FIG. 2.
FIG. 5 illustrates a cross-sectional perspective view of the example rotating power connector of FIG. 3A and FIG. 3B being inserted into the quick-change cable system of FIG. 2.
FIGs. 6A-6D illustrate another example quick-change cable system that may be used to implement the robotic welding system of FIG. 1.
FIG. 7 is a flowchart illustrating an example method that may be performed to replace a welding torch cable having the quick-change cable system of FIG. 2.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Conventional welding torch cable replacement is time-consuming and require tools to disassemble connector(s) associated with the welding torch in order to replace the cable. Furthermore, disassembling the connector disrupts a tool center point of the welding torch, which requires updating a welding program. Each time a welding torch cable is replaced and the welding program is updated, the tool center point changes slightly, which can lead to a tool center point that deviates substantially from the originally programmed tool center point.

Disclosed example quick-change cable and welding torch systems reduce the maintenance involved in replacing welding torch cables, reduce the complexity of welding torch cable systems, and/or improve the effectiveness or performance of the welding torch system. Example quick-change cable and welding torch systems include a housing into which a welding torch cable can be inserted. The welding torch cable can be removed quickly and efficiently, without the use of any tools and is configured so that the welding torch cable can be replaced without modifying the tool center point of the welding torch.

Disclosed example quick-change cable and welding torch systems provide a very low-maintenance solution to replacing the welding torch cable, by substantially decreasing the time required to replace the welding torch cable. Disclosed example quick-change cable and welding torch systems are also less complex and/or durable than conventional welding torch cable system, such as by eliminating the use of tools when replacing the welding torch cable and providing a quick-change system that can quickly and easily be removed. Disclosed example quick-change cable systems may also be used with more types and/or sizes of welding torches than conventional welding torches.

Disclosed example quick-change cable and welding torch systems include: a housing for securing a welding torch comprising: the housing; a first aperture at a first end of the housing to receive a welding torch neck; a second aperture at a second end of the housing to receive a welding torch cable; and at least one fastener mounted on an external surface of the housing, wherein the fastener is configured to bias the welding torch cable toward the first aperture to secure the welding torch cable when the fastener is engaged. In some example quick-change cable and welding torch systems, one or more sensors are configured to determine that the fastener is engaged.

Some example quick-change cable and welding torch systems include a visual indicator when the fastener is engaged. In some example quick-change cable and welding torch systems, the fastener comprises a clamp. In some example quick-change cable and welding torch systems, the fastener comprises a cam lobe. In some example quick-change cable and welding torch systems, the cam lobe is further configured to place a force on the welding torch cable to bias the rotating power connector toward the first aperture.

In some example quick-change cable and welding torch systems, a sealing element is arranged within the housing between the first aperture and the second aperture, and the welding torch cable is in engagement with the sealing element when the welding torch cable is secured. In some example quick-change cable and welding torch systems, the welding torch cable provides pressure onto the sealing element when the welding torch cable is secured. In some example quick-change cable and welding torch systems, the sealing element provides a stop for the welding torch cable. In some example quick-change cable and welding torch systems, the sealing element is configured to provide a resistive force at the first aperture. In some example quick-change cable and welding torch systems, the sealing element reduces leakage of shielding gas.

In some example quick-change cable and welding torch systems, a sealing element and biasing element are arranged within the housing between the first aperture and the second aperture, wherein the welding torch cable is in engagement with the sealing element and the biasing element when the welding torch cable is secured. In some example quick-change cable and welding torch systems, the welding torch cable is rotatably connect the welding torch cable to the welding torch neck. In some example quick-change cable and welding torch systems, the housing is electrically isolated from an electrical path of the welding torch. In some example quick-change cable and welding torch systems, the rotating power connector is configured to be removed from the housing when the fastener is not engaged. In some example quick-change cable and welding torch systems, the housing is configured to retain a tool center point of the welding torch.

Disclosed robotic welding systems include: a robotic arm; a welding torch cable comprising a rotating power connector; a wire feeder; a welding torch neck attached to the robotic arm; and a housing configured to secure the welding torch neck to the welding torch cable, the housing including: a first aperture at a first end of the housing to receive the welding torch neck; a second aperture at a second end of the housing to receive the rotating power connector; and at least one fastener mounted on an external surface of the housing, wherein the fastener is configured to secure the rotating power connector when the fastener is engaged. In some example robotic welding systems, the rotating power connector is configured to be removed from the housing when the fastener is not engaged. In some example robotic welding systems, the housing is configured to retain a tool center point of the welding torch neck.

As used herein, the terms "first" and "second" may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein, the term "welding program" or "weld program" includes at least a set of welding parameters for controlling a weld. A welding program may further include other software, algorithms, processes, or other logic to control one or more welding-type devices to perform a weld.

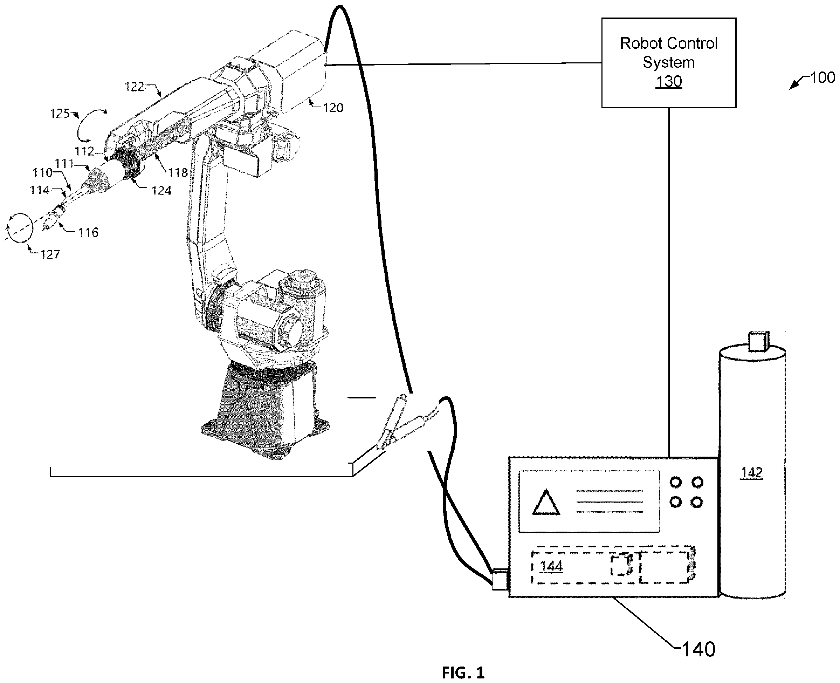

FIG. 1 illustrates an example robotic welding system 100, in accordance with aspects of this disclosure. A welding torch 110 (e.g., a gas metal arc welding (GMAW) torch, a metal inert gas (MIG) torch, etc.) is comprised of a torch body having a housing 111, a clutch 112, a welding torch neck 114, and a nozzle assembly 116 (which may include a contact tip, gas diffuser, gas nozzle, and other components). A welding torch cable 118 connects to the welding torch 110 and/or power supply 140 to deliver wire, gas 142, and electrical power to the welding torch 110. The shielding gas 142, electrical current, and a consumable electrode (e.g., a welding wire) are channeled through the welding torch 110 to output a welding arc at the nozzle assembly 116. As described in more detail below, a rotating power connector or other type of welding torch cable connector may be arranged within the housing 111 and the clutch 112, providing paths for electrical conduction, fluid conduction, and/or wire guidance between the welding torch neck 114 and the welding torch cable 118.

The welding torch cable 118 may include one or more of a core tube (e.g., to conduct gas and/or welding wire), copper cabling (e.g., to conduct welding-type current), and/or shielded lead wires (e.g., to communicate sensor measurements, current, and/or other signaling between the torch and a control device), as a non-limiting list of examples. The welding torch cable 118 may be connected to a wire feeder 120 opposite the welding torch 110. The welding torch neck 114 is inserted into a forward end of the housing 111 and allows for the communication of the consumable electrode, the shielding gas 142, and/or the welding current to the nozzle assembly 116 mounted on the welding torch neck 114. The welding torch 110 is coaxially mounted to a robotic arm 122 such that the welding torch cable 118 is arranged along substantially the center axis of the robotic arm 122. However, the welding torch 110 may be mounted to a robotic arm in a disposition other than a coaxially mounted disposition. In some examples, the robotic arm 122 is configured to rotate the welding torch 110 bidirectionally about an axis 125, as well as rotate bidirectionally about the center axis 127 of the robotic arm 122. For instance, a robotic manipulator 124 is employed to control movement of the welding torch 110 in one or more directions using a joint of the robot.

The wire feeder 120 feeds the welding wire through the welding torch cable 118, clutch 112, housing 111, welding torch neck 114, and through an opening in a contact tip of the nozzle assembly 116 at the forward end of the welding torch 110. The welding wire, when energized for welding, carries an electrical potential. When the welding wire arcs with metal workpieces, an electrical circuit is completed and current flows through the welding wire, across the arc to metal workpieces and to a ground or other type of current return. The arc causes the welding wire and the metal of the workpieces to melt, thereby joining the workpieces as the melt solidifies.

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, and resistance welding. In some examples, the power supply 140 and/or other welding equipment are configured to support one or more, but fewer than all, types of welding processes. To change welding processes, the power supply 140, welding torch 110, and/or other welding equipment may be removed (e.g., disconnected and moved away from the robotic welding system 100) and replaced by a different welding-type power supply, torch, and/or other welding equipment that supports the desired welding process. Additionally or alternatively, multiple different types of welding equipment (e.g., multiple power supplies having different capabilities, multiple torches, etc.) may be co-located (e.g., proximate to the robotic manipulator 124, on a rack of equipment, etc.) to enable rapid reconfiguration of the robotic welding system 100. In some examples, the housing 111 and/or the clutch 112 are compatible with multiple different types of welding torches (e.g., different makes and/or models). In some other examples, the housing 111 and/or the clutch 112 are replaceable with other versions to match a particular type, make, and/or model of welding torch to a particular type, make, and/or model of robotic arm.

The example robotic manipulator 124 and/or the example robot control system 130 are configured to transmit commands, requests, data, and/or other messages and/or communications to the power supply 140 via one or more protocols. The robotic manipulator 124 and/or the robot control system 130 are further configured to receive responses, acknowledgments, data, and/or other messages and/or communications from the power supply 140 via the one or more protocols. Based on a robotic welding procedure, the robotic manipulator 124 and/or the robot control system 130 may communicate parameters to the power supply 140 for configuration according to the robotic welding procedure, and/or adjust the welding-type process based on the variables and/or other data obtained from the power supply 140 while performing welding operations. In addition to communication with the power supply 140, the robotic manipulator 124, and/or the robot control system 130, the power supply 140, the robotic manipulator 124, and/or the robot control system 130 may communicate with other welding equipment (e.g., a welding accessory, such as the wire feeder 120, a shielding gas supply valve, a welding wire preheating system, a fume extraction system) and/or other robotic equipment.

In some examples, the power supply 140 directly supplies input power to the welding torch 110. In the illustrated example, the power supply 140 is configured to supply power to welding operations and/or preheating operations. The example power supply 140 may also provide power to a wire feeder to supply electrode wire to the welding torch 110 for various welding applications (e.g., GMAWwelding, flux core arc welding (FCAW)). The power supply 140 includes a controller 144 to control the operation of the power supply 140. The controller 144 may also include interface circuitry for communicating data to other devices in the system, such as the wire feeder 120, the robotic manipulator 124, and/or the robot control system 130. For example, in some situations, power supply 140 wirelessly communicates with other welding devices within the welding system. Further, in some situations, the power supply 140 communicates with other welding devices using a wired connection, such as by using a network interface controller (NIC) to communicate data via a network (e.g., ETHERNET, 10baseT, 10base100, etc.).

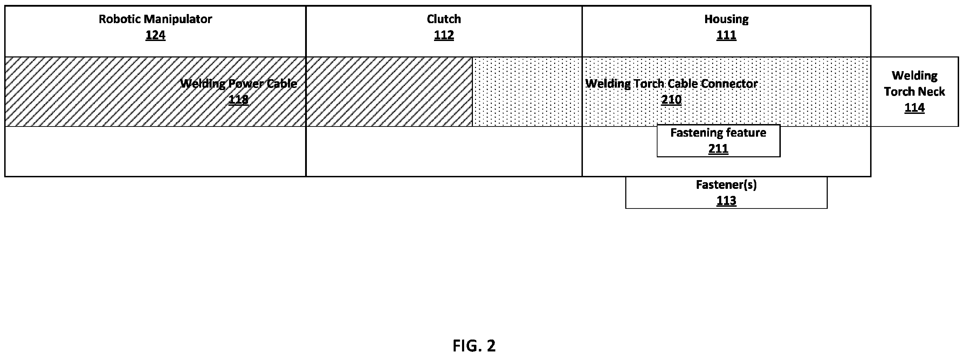

FIG. 2 illustrates a schematic diagram of an example quick-change cable system 200 that may be used to implement the robotic welding system of FIG. 1. In some examples, the welding torch cable 118 connects to a welding torch cable connector 210 at one end. When employed with the welding torch 110, the welding torch 210 allows the welding torch cable 118 to rotate relative to the housing 111, the clutch 112, the welding torch neck 114, and the welding torch 110 described in FIG. 1. In some examples, the welding torch cable connector is a rotating power connector, and the rotatable movement of the welding torch cable 118 provides relief to the otherwise rigid connection through the welding torch 110, significantly reducing the amount of stress on, and extending the useful life of, the welding torch cable 118. The welding torch cable connector 210 allows for the efficient passage of one or more of electrical current, welding wire, and/or shielding gas from the welding torch cable 118 to the nozzle assembly 116.

The welding torch cable connector 210 is arranged within the housing 111, the clutch 112, and the robotic manipulator 124 and connects to the welding torch neck at an end opposite to the welding torch cable 118. The robotic manipulator 124 controls movement of the welding torch as described above. The welding torch cable connector 210 includes one or more fastening features 320 and is retained/secured within the housing 111 and the clutch 112 via one or more fasteners 113 as described further below.

The housing 111 and the clutch 112 mechanically secure the welding torch cable connector 210 to the robotic arm 122. In some examples, the housing 111 and the clutch 112 rotate with the robotic arm 122 described in FIG. 1. The housing 111 and clutch 112 are made of electrically insulating material, such as a plastic or similar, thereby shielding the outside of the welding torch cable connector 210 from short-circuiting to external components and/or devices (e.g., the robotic arm 122). The housing 111 and the clutch 112 facilitate mounting the welding torch neck 114 and maintain the tool center point of the welding torch 110. In some examples, the housing 111 and/or the clutch 112 are compatible with multiple different types of welding torches (e.g., different makes and/or models). In some other examples, the housing 111 and/or the clutch 112 are replaceable with other versions to match a particular type, make, and/or model of welding torch to a particular type, make, and/or model of robotic arm.

The housing 111 may include one or more fastener(s) 113 external to the housing 111 and configured to engage a fastening feature 320 of the welding torch cable connector 210 or of the welding torch cable 118. The fastener(s) 113 may be cam-type fastener(s) (e.g., cam lobes, cam levers, cam clamps, cam locks), clamp handles, clamp levers, spring catches, latches, quick-release fastener(s), etc.), which eliminate the need for tools when removing and/or replacing the welding torch cable 118. The fastening feature 320 may be a groove, channel, guide, and/or other type of fastening or latching feature. When the fastener(s) 113 are in an engaged position, the fastener(s) 113 engage the fastening feature 320 in order to retain the welding torch cable connector 210 and/or the welding torch cable 118 within the housing 111. In some examples, when the fastener(s) 113 are in a disengaged position, an electrical path may be maintained with the welding torch neck 114 until the welding torch cable 118 and/or the welding torch cable connector 210 is separated from the welding torch neck 114 (e.g., by an operator).

In some examples, the welding torch cable connector 210 is a rotating power connector as described in further detail below. The welding torch cable connector 210 may receive the welding torch neck 114. In some examples, the welding torch cable connector 210 includes one or more electrical contacts arranged within the welding torch power connector 210 to provide an electrical connection between the welding torch neck 114 and the welding torch cable 118. For instance, power may be conducted through the welding torch cable connector 210 to the welding torch neck 114 and towards the nozzle assembly 116.

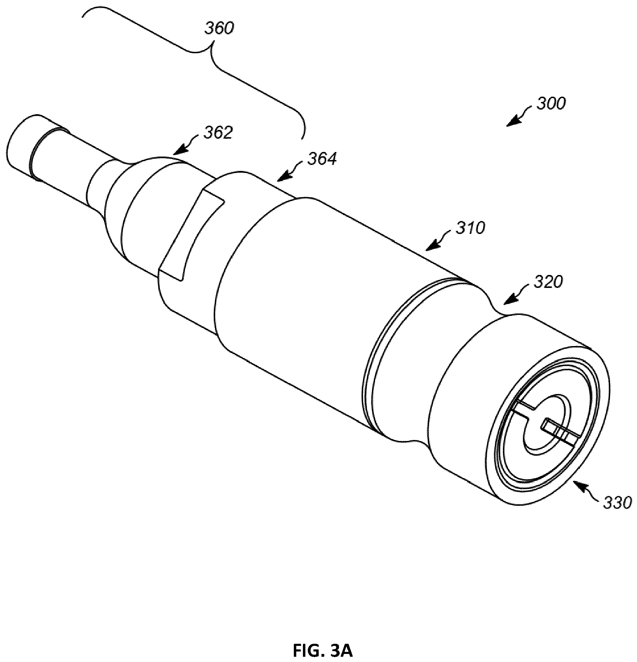

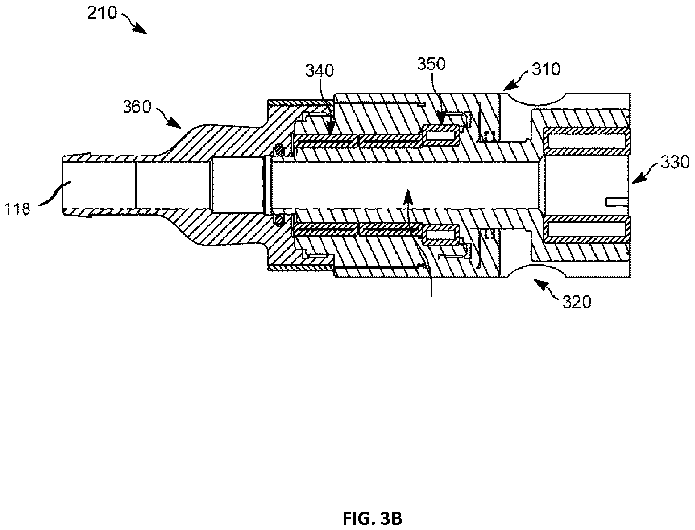

FIG. 3A illustrates a perspective view of an example rotating power connector 210 that may be used to implement the quick-change cable system of FIG. 2, and FIG. 3B illustrates a sectional view of an example rotating power connector that may be used to implement the quick-change cable system of FIG. 2, in accordance with aspects of this disclosure.

Referring to FIG. 3A, the example welding torch cable connector of FIG. 2 is a rotating power connector 300. The rotating power connector 300 includes an enclosure 310, a fastening feature 320, an interface 330, and a coupler 360. The enclosure 310 is made of an electrically insulating material and is configured with the interface 330 at one end and the coupler 360 at an opposite end. The enclosure 310 houses a connector 370 and other components which are described below with reference to FIG. 3B. The interface 330 is integrated into the enclosure 310 at one end and is configured to receive the welding torch neck 114. For example, the welding torch neck 114 is configured to slide into and out of the interface 330, and forms an electrical connection with the interface 330. In some examples, the interface 330 is a socket interface or other type of interface that allows rotation of the welding torch cable 118 in relation to the welding torch neck 114. The surface surrounding the bore of the socket may include spring-loaded contacts which are biased toward a longitudinal axis of the interface 330 to sustain an electrical path during translation, rotation, and/or other relative movement of the torch neck 114 and the interface 330. In some examples, the spring-loaded contacts are separated by gaps, such that the interface 330 is configured to deliver both electrical current (e.g., via the contacts) and shielding gas (e.g., through gaps between the contacts) to the welding torch neck 114.

The coupler 360 is configured to secure the welding torch cable 118 to the rotating power connector 300. In some examples, the coupler 360 is configured with a crimp connector 362. The crimp connector 362 may be any type of coupler that provides a radial force to secure the welding torch cable to the enclosure 310 (e.g., a crimped-style fitting, a compression fitting, a threaded compression fitting, etc.). As shown, the crimp connector 362 is secured to the enclosure 310 via a connection 364, such as a thread and set screw connection, but may also include a press-fit, knurled press-fit, snap-fit, screws, bolts, adhesive, a weld, braze, and/or any other type of fastener. Additionally or alternatively, the conductors of the welding torch cable 118 may be ultrasonically welded, or otherwise bonded, to the connector 370. Conductive wires (e.g., copper wires) of the welding torch cable 118 are crimped to form a solid electric connection between the welding torch cable 118 and the crimp connector 362.

In some examples, the enclosure 310 includes a fastening feature 320, such as a groove, channel, or other type of fastening/latching mechanism around an outer circumference of the enclosure 310 to secure the rotating power connector 300.

Referring to FIG. 3B, the enclosure 310 of the rotating power connector 300 described in FIG. 3A, contains a connector 370 that is able to rotate within the enclosure 310. The connector 370 includes the interface 330 described above with reference to FIG. 3A at a first end and the coupler 360. The connector 370 is rotatably coupled to the interface 330. In some examples, a bearing 350 is arranged within the enclosure 310 to rotatably couple the connector 370 and the interface 330.

The rotating power connector 300 includes one or more electrical contacts arranged within the enclosure 310 to provide an electrical connection between the welding torch neck 114 and the connector 370 during rotation of the connector 370 with respect to the interface 330. In some examples, the interface 330 and the connector 370 comprise a current pathway from the welding torch cable 118 to the welding torch neck 114. In some examples, once mated with the welding torch cable 118, one or more power conductors connect directly to the connector 370. For instance, the connector 370 is arranged to conduct power to the welding torch neck 114 towards the nozzle assembly 116. In some examples, a spring contact connection provides electrical contact between the interface 330 and the connector 370.

In the disclosed example of FIG. 3B, the welding torch neck 114 is configured to slide into and out of the interface 330, and forms an electrical connection with the interface 330. The welding torch neck 114 described above with reference to FIG. 1, is configured to plug into the interface 330 (e.g., by insertion of the rotating power connector 300 over the welding torch neck 114 or insertion of the welding torch neck 114 into the rotating power connector 300), thereby connecting the welding torch cable 118 to the nozzle assembly 116 of the welding torch 110. In some examples, one or more electrical contact rings 340 are placed inside the enclosure 310 and surrounding the connector 370. In some examples, one or more bearings 350 are employed, such as arranged about the connector 370 and bracketing the one or more electrical contact rings 340, as illustrated in FIG. 3B. The one or more bearings 350 provide mechanical stability while allowing rotation of the connector 370. In some examples, the one or more bearings 350 may be a needle roller bearing, or any other type of bearing that allows rotation of the connector 370 while providing alignment and/or preventing side loading (e.g., deviation from the axial direction).

The rotating connector 370 and/or the coupler 360 extend from an end of the rotating power connector 300 opposite the interface 330, and connect to the welding torch cable 118. When employed with the welding torch 110, the rotating power connector 300 allows the welding torch cable 118 to rotate relative to the enclosure 310.

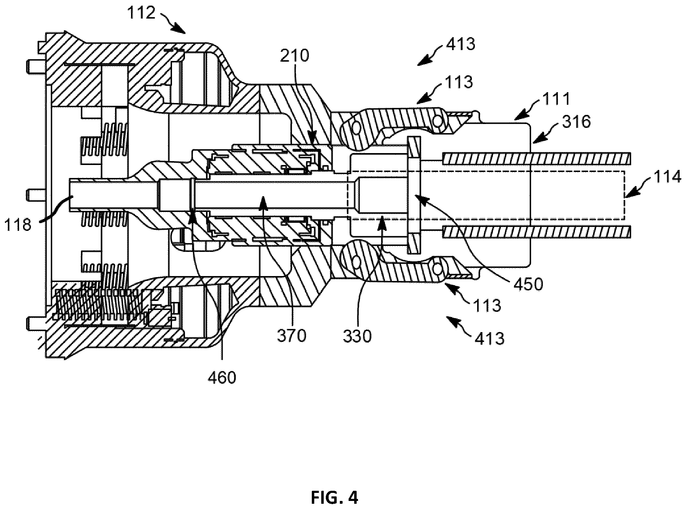

FIG. 4 illustrates a sectional view of the example rotating power connector of FIG. 3A and FIG. 3B secured within the quick-change cable system of FIG. 2. The quick change cable system includes a housing 111 and a clutch 112 as described in FIG. 2. The rotating power connector 300 may be inserted into the housing 111 and the clutch 112. The housing 111 may be fastened after the rotating power connector 300 makes electrical contact with the welding torch neck 114. In some examples, the welding torch neck 114 is a copper or other conductive tube that is inserted into the interface 330 of the rotating power connector 300. Once connected, the rotating power connector 300 and the welding torch neck 114 form an electrical connection, thereby allowing the rotating power connector 300 to transfer power directly to the welding torch neck 114.

In some examples, the welding torch neck 114 is surrounded by an insulator 316. The insulator 316 prevents electrical conductivity outside of the welding torch neck 114 and allows power to flow directly from the rotating power connector 300 through the welding torch neck 114 and to the nozzle assembly 116. A sealing element 450 is located at a perimeter of the interface 330. In some examples, the sealing element 450 is an O-ring, washer or similar seal arranged at the opening of the interface 330 to reduce and/or prevent shielding gas from escaping. In some other examples, the sealing element 450 comprises a washer and a biasing element, such as a spring. The sealing element 450 may provide a resistive force on the rotating power connector 300 when the rotating power connector 300 is locked into place by the fasteners 113. Additionally and/or alternatively, the welding torch cable 118 includes a cable sealing element 460 on an end that is fitted within the housing 111 and/or the clutch 112 in order to provide a seal and/or resistive force against the housing 11 and/or the clutch 112. In some examples, the cable sealing element 460 is arranged at a perimeter of the welding torch cable 118. The cable sealing element 460 may include an O-ring, washer, or other similar seal.

In some examples, the fastener(s) 113 are cam lobe(s) 413 as depicted in Fig. 4. The rotating power connector 300 is inserted into the clutch 112 and the housing 111 at an end opposite the welding torch neck 114 by placing an axial force on the rotating power connector 300 until the rotating power connector 300 is stopped by the sealing element 450. The cam lobe 413 may place an additional force on the rotating connector to bias the connector 370 towards an opening where the welding torch neck 114 is received. The welding torch neck 114 is inserted into the interface 330 of the rotating power connector and makes electrical contact with the rotating power connector.

The rotating power connector 300 may be secured by locking the cam lobe(s) 413 located externally on the housing 111. Locking or engaging the cam lobe(s) 413 retains the rotating power connector 300 in the housing 111 by engaging the fastening feature(s) 320 of the rotating power connector as described in FIG. 3A and FIG. 3B. When the cam lobe(s) 413 are engaged, the welding torch neck 114 and the rotating power connector 300 may be locked in place and unable to be disconnected from each other. In some examples, the cam lobe(s) 413 may be engaged by pushing the first portion of the fastener(s) 313 towards the housing 111. The pushing in turn causes the second portion to engage a fastening feature in the housing 111, thereby retaining the rotating power connector 300 in place. The rotating power connector 300 provides pressure onto the sealing element when the rotating power connector 300 is secured.

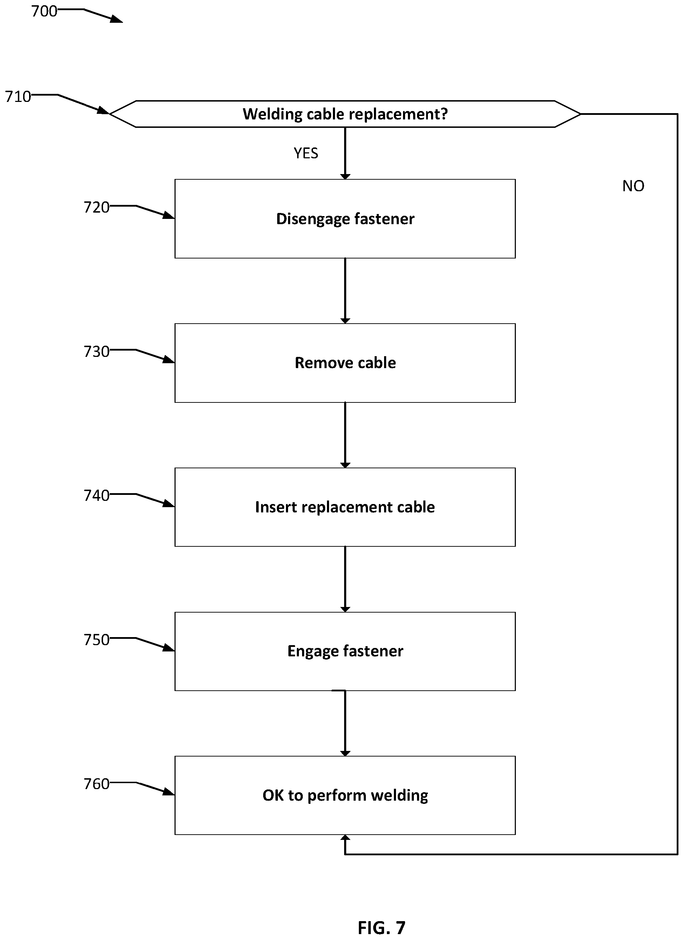

In some examples, visual indicators are provided on the housing 111, the rotating power connector 300, and/or the clutch 112 to inform an operator that the rotating power connector 300 is fully seated and/or retained in the housing 111, thereby indicating that a welding operation may resume or commence. The visual indicators may be light emitting diodes, a marking, or other indicators that inform the operator that the fastener(s) 313 are completely secured and/or locked in place. In some examples, the visual indicators can convey information based on a color, lettering, or other indications depending on whether the welding torch cable is properly installed. For example, the visual indicators can appear red, green, or other colors to provide visual information to the operator. Examples of visual indicators are further described below with reference to FIG. 7.

In some examples, the indicators are one or more sensor(s) that provide feedback to the controller 144 of the power supply 140 and/or the robot control system 130 informing the controller 144 and/or the robot control system 130 whether the welding torch cable is properly installed. Welding may not be allowed when the fastener(s) are not completely secured and engaging the fastening feature 260 of the rotating power connector 300. If the cable is not installed properly, the weld circuit remains open and a weld fault/arc fault occurs. The one or more sensors may be located in the welding torch 110, at the nozzle assembly 116, contact tip, etc. In some examples, the sensor(s) may be a voltage sensor, a current sensor, etc.

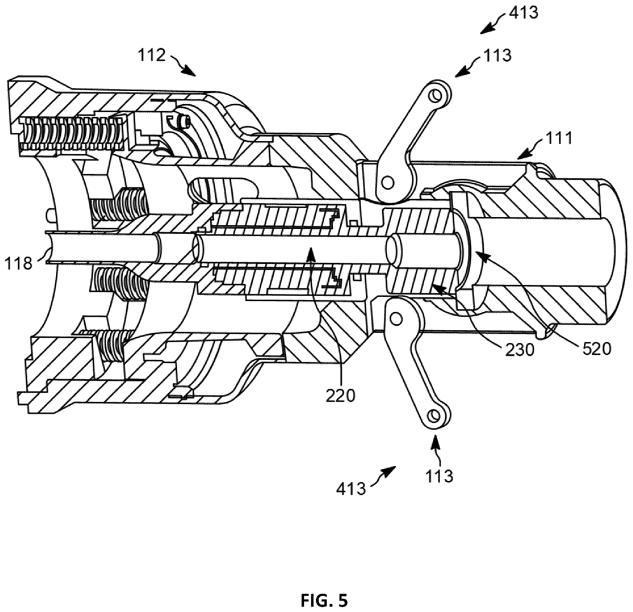

FIG. 5 illustrates a cross-sectional perspective view of the example rotating power connector of FIG. 3A and FIG. 3B being inserted into the quick-change cable system of FIG. 2. In some examples, the welding torch cable 118 may need to be removed and/or replaced. In some examples, in order to be replaced, the rotating power connector 300 that is connected to the welding torch cable 118 via the coupler 360 is also removed. In some other examples, the welding torch cable is inserted directly into the quick-change cable system of Fig. 2 and/or includes a welding torch cable connector that does not provide for rotation of the welding torch cable relative to the housing 111, the clutch 112, and/or the torch neck 114. The rotating power connector 300 is retained by the housing 111 using fastener(s) 113. In some examples, the fastener(s) 113 are cam-type fastener(s) (e.g., cam levers, cam clamps, cam locks), clamp handles, clamp levers, spring catches, latches, quick-release fastener(s), etc.), which allow for tool less removal and replacement of the clutch 112 and the housing 111 when replacing the welding torch cable 118.

In some examples, when the fastener(s) 113 are in a locked/engaged position, the fastener(s) 113 are engaging the fastening feature 320 of the rotating power connector 300 in order to retain the rotating power connector 300 within the housing 111. In some examples, the fastener(s) 113 on the housing 111 that are employed to retain the rotating power connector 300 are disengaged. The disengaging of the fastener(s) 113 allows the rotating power connector 300 to be removed along with the welding torch cable 118. In some examples, when the fastener(s) 113 are disengaged but the rotating power connector 300 is not yet removed, the rotating power connector 300 continues to make electrical contact, and the electrical pathway between the welding torch neck 114 and the welding torch cable 118 is still active. In some examples, the welding torch cable 118 and/or a connector of the welding torch cable may include one or more fastening features to allow the welding torch cable to be removed and/or replaced.

In some examples, the fastener(s) 113 may be released by pulling one end of the fastener(s) 113 away from the housing 111. The pulling in turn causes the rotating power connector to disengage from the fastening feature 320 of the rotating power connector 300, thereby releasing the rotating power connector from the locked position. In some examples, releasing the fastener(s) of the housing 111 causes the fasteners to disengage from the welding torch cable 118 and/or a connector of the welding torch cable in order to be able to release the welding torch cable and/or the connector of the welding torch cable.

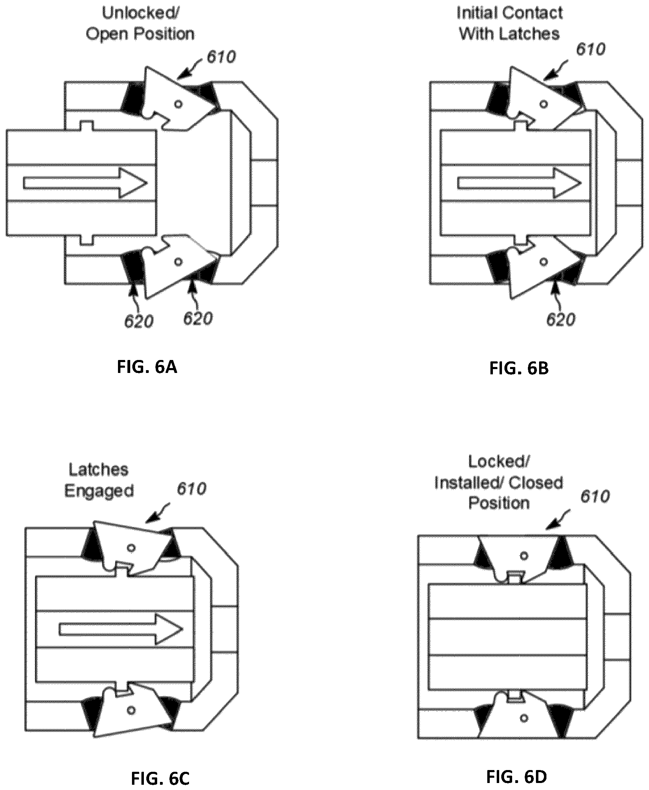

FIGs. 6A-6D illustrate another example quick-change cable system that may be used to implement the robotic welding system of FIG. 1. In some examples, the fastener(s) 113 described in FIG. 1 are latches. FIG. 6A depicts the latches 610 in an unlocked/open position as the welding torch cable 118 is inserted into the housing 111 and/or clutch 112. The open latches allow the visual indicators 620 which may be a bright color such as red, orange, yellow, etc. to be visible to an operator. As the welding torch cable is pushed with an axial force towards the welding torch neck 114, the welding torch cable initially contacts the latches (see FIG. 6B) and then engages the latches as depicted in FIG. 6C. In some examples, a rotating power connector and/or other type of nonrotating connector engages the latches. As the axial force continues to be placed on the welding torch cable, the welding torch cable continues to move forward until the latches close as depicted in FIG. 6D. In FIG. 6D, when the latches are completely closed, the visual indicators are no longer visible and welding may be performed. In some examples, sensors as described above with reference to FIG. 4 may be used to indicate the latches are completely closed, or both sensors and visual indicators may be used.

FIG. 7 is a flowchart illustrating an example method 700 that may be performed to replace a welding torch cable having the quick-change cable system of FIG. 2. In some examples, when a welding torch cable replacement is needed (block 710), the fastener is disengaged (block 720) by opening or unlocking one or more fastener(s) 113 as described in FIG. 5. The welding torch cable is then removed (block 730) by pulling the cable from the back of the welding torch.

In some examples, if a welding torch cable connector or rotating power connector is connected to the welding torch cable, the welding torch cable connector or rotating power connector is also removed. In some examples, the rotating power connector 300 (and/or one or more components therein) and/or welding torch cable connector is a replaceable component that can be discarded and replaced with another rotating power connector by loosening the fastener(s), separating the welding torch cable 118 from the rotating power connector 300, and attaching a new rotating power connector to the welding torch cable 118. In some examples, when the useful life of the rotating power connector 300 has ended, the entire assembly of the welding torch cable 118 and rotating power connector 300 is discarded and replaced in order to replace the rotating power connector 300.

In some examples, the replacement welding torch cable with the rotating power connector 300 is inserted into the clutch 112 and the housing 111 until the rotating power connector 300 reaches the sealing element 450 described above with respect to FIG. 4 and moving over the torch neck, thereby inserting the welding torch neck 114 is into the interface 330 of the enclosure 310 of the rotating power connector (block 740). Next, the fastener(s) 113 are engaged (block 750) by engaging a fastening feature of the rotating power connector, of a welding torch cable connector, or on the welding torch cable as also described in FIG. 4. The system is now ready to perform welding (block 760).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents. Certain embodiments of the invention are described in the following clauses:
Clause 1. A housing for securing a welding torch comprising:
   the housing;
   a first aperture at a first end of the housing to receive a welding torch neck;
   a second aperture at a second end of the housing to receive a welding torch cable; and
   at least one fastener mounted on an external surface of the housing, wherein the fastener is configured to bias the welding torch cable toward the first aperture to secure the welding torch cable when the fastener is engaged.
Clause 2. The housing of clause 1, further comprising one or more sensors configured to determine that the fastener is engaged.
Clause 3. The housing of clause 1, further comprising a visual indicator when the fastener is engaged.
Clause 4. The housing of clause 1, wherein the fastener comprises a clamp.
Clause 5. The housing of clause 1, wherein the fastener comprises a cam lobe.
Clause 6. The housing of clause 5, wherein the cam lobe is further configured to place a force on the welding torch cable to bias the welding torch cable toward the first aperture.
Clause 7. The housing of clause 1, further comprising a sealing element arranged within the housing between the first aperture and the second aperture, wherein the welding torch cable is in engagement with the sealing element when the welding torch cable is secured.
Clause 8. The housing of clause 7, wherein the welding torch cable provides pressure onto the sealing element when the welding torch cable is secured.
Clause 9. The housing of clause 7, wherein the sealing element provides a stop for the welding torch cable.
Clause 10. The housing of clause 7, wherein the sealing element is configured to provide a resistive force at the first aperture.
Clause 11. The housing of clause 7, wherein the sealing element reduces leakage of shielding gas.
Clause 12. The housing of clause 1, further comprising a sealing element and biasing element arranged within the housing between the first aperture and the second aperture, wherein the welding torch cable is in engagement with the sealing element and the biasing element when the welding torch cable is secured.
Clause 13. The housing of clause 1, wherein a rotating power connector is configured to rotatably connect the welding torch cable to the welding torch neck.
Clause 14. The housing of clause 1, wherein the housing is electrically isolated from an electrical path of the welding torch.
Clause 15. The housing of clause 1, wherein the welding torch cable is configured to be removed from the housing when the fastener is not engaged.
Clause 16. The housing of clause 13, wherein the housing is configured to retain a tool center point of the welding torch.
Clause 17. A robotic welding system comprising:
   a robotic arm;
   a welding torch cable;
   a wire feeder;
   a welding torch neck attached to the robotic arm; and
   a housing configured to secure the welding torch neck to the welding torch cable, the housing comprising:
      a first aperture at a first end of the housing to receive the welding torch neck;
      a second aperture at a second end of the housing to receive the welding torch cable; and
      at least one fastener mounted on an external surface of the housing, wherein the fastener is configured to secure the welding torch cable when the fastener is engaged.
Clause 18. The robotic welding system of clause 17, wherein the welding torch cable is configured to be removed from the housing when the fastener is not engaged.
Clause 19. The robotic welding system of clause 17, wherein the housing is configured to retain a tool center point of the welding torch neck.
Clause 20. The robotic welding system of clause 17, wherein the welding torch cable comprises a rotating power connector.
Clause 21. The robotic welding system of clause 17, wherein the welding torch cable comprises a cable sealing element arranged on a first end to seal against the housing.

## Claims

1. A housing for securing a welding torch comprising:
the housing;
a first aperture at a first end of the housing to receive a welding torch neck;
a second aperture at a second end of the housing to receive a welding torch cable; and
at least one fastener mounted on an external surface of the housing, wherein the fastener is configured to bias the welding torch cable toward the first aperture to secure the welding torch cable when the fastener is engaged.

2. The housing of claim 1, further comprising one or more sensors configured to determine that the fastener is engaged.

3. The housing of claim 1, further comprising a visual indicator when the fastener is engaged.

4. The housing of claim 1, wherein the fastener comprises a clamp.

5. The housing of claim 1, wherein the fastener comprises a cam lobe, and optionally wherein the cam lobe is further configured to place a force on the welding torch cable to bias the welding torch cable toward the first aperture.

6. The housing of claim 1, further comprising a sealing element arranged within the housing between the first aperture and the second aperture, wherein the welding torch cable is in engagement with the sealing element when the welding torch cable is secured.

7. The housing of claim 6, wherein the welding torch cable provides pressure onto the sealing element when the welding torch cable is secured, or wherein the sealing element provides a stop for the welding torch cable.

8. The housing of claim 6, wherein the sealing element is configured to provide a resistive force at the first aperture, or wherein the sealing element reduces leakage of shielding gas.

9. The housing of claim 1, further comprising a sealing element and biasing element arranged within the housing between the first aperture and the second aperture, wherein the welding torch cable is in engagement with the sealing element and the biasing element when the welding torch cable is secured.

10. The housing of claim 1, wherein a rotating power connector is configured to rotatably connect the welding torch cable to the welding torch neck.

11. The housing of claim 1, wherein the housing is electrically isolated from an electrical path of the welding torch, or wherein the welding torch cable is configured to be removed from the housing when the fastener is not engaged.

12. The housing of claim 10, wherein the housing is configured to retain a tool center point of the welding torch.

13. A robotic welding system comprising:
a robotic arm;
a welding torch cable;
a wire feeder;
a welding torch neck attached to the robotic arm; and
a housing configured to secure the welding torch neck to the welding torch cable, the housing comprising:
a first aperture at a first end of the housing to receive the welding torch neck;
a second aperture at a second end of the housing to receive the welding torch cable; and
at least one fastener mounted on an external surface of the housing, wherein the fastener is configured to secure the welding torch cable when the fastener is engaged.

14. The robotic welding system of claim 13, wherein the welding torch cable is configured to be removed from the housing when the fastener is not engaged, or wherein the housing is configured to retain a tool center point of the welding torch neck.

15. The robotic welding system of claim 13, wherein the welding torch cable comprises a rotating power connector, or wherein the welding torch cable comprises a cable sealing element arranged on a first end to seal against the housing.
